# EUROPÄISCHE PATENTSCHRIFT

(11) **EP 2 470 348 B1**
(45) Veröffentlichungstag und Bekanntmachung des Hinweises auf die Patenterteilung: **09.04.2014**
(21) Anmeldenummer: 10749464.3
(22) Anmeldetag: 22.07.2010
(51) Int. Cl.: B29C 49/78, G05B 13/04, B29C 49/06, B29C 49/12, B29C 49/36, B29C 49/64

(54) **VERFAHREN UND VORRICHTUNG ZUR BLASFORMUNG VON BEHÄLTERN**
METHOD AND DEVICE FOR BLOW MOLDING CONTAINERS
PROCÉDÉ ET DISPOSITIF DE MOULAGE PAR SOUFFLAGE DE CONTENANTS

(30) Priorität: 25.08.2009 DE 102009040803
(43) Veröffentlichungstag der Anmeldung: 04.07.2012
(73) Patentinhaber: KHS Corpoplast GmbH, 22145 Hamburg (DE)
(72) Erfinder: HAESENDONCKX, Frank, 22395 Hamburg (DE); GERNHUBER, Matthias, 22527 Hamburg (DE); PASUTANON, Pisarn, 22145 Hamburg (DE)
(74) Vertreter: Hausfeld, Norbert
(86) Internationale Anmeldenummer: PCT/DE2010/000883
(87) Internationale Veröffentlichungsnummer: WO 2011/023155

(56) Entgegenhaltungen:
- WO-A1-97/37823
- WO-A1-02/087850
- WO-A1-2007/110018
- DATABASE WPI Week 200168 Thomson Scientific, London, GB; AN 2001-600282 XP002614903, -& JP 2001 219462 A (SEKISUI CHEM IND CO LTD) 14. August 2001 (2001-08-14)

## Beschreibung

Die Erfindung betrifft ein verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, sowie bei dem mindestens ein den Blasformungsvorgang charakterisierender Parameter meßtechnisch erfaßt und einer Steuereinrichtung zugeführt wird, die zur veränderung mindestens eines den Blasformungsvorgang beeinflussenden Parameters auf mindestens ein Stellelement einwirkt.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und mindestens eine mit einer Blasform versehene Blasstation aufweist, sowie bei der eine Steuereinrichtung verwendet ist, und die mindestens einen Sensor zur meßtechnischen Erfassung mindestens eines den Blasformungsvorgang charakterisierenden Parameters aufweist, der mit der Steuereinrichtung verbunden ist.

Bei einer Behälterformung durch Blasdruckeinwirkung werden vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Weitere Verfahren und Vorrichtungen werden in WO 2010054610, WO 02087850, JP 2001219462, WO 9737823 und WO 2007110018 offenbart.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die verwendung von Spreizdornen, die zur Halterung in einen Mündungsbereich des Vorformlings einführbar sind, gehören ebenfalls zu den verfügbaren Konstruktionen.

Eine Handhabung von Behältern unter verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten Wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren Wandungsbereichen des geblasenen Behälters führen und daß die wärmeren Bereiche des Vorformlings bei der Durchführung der Blasverformung stärker verstreckt werden und hierdurch zu dünneren wandungsbereichen des geblasenen Behälters führen.

Die Temperatur im Bereich der Vorformlinge kann mit sogenannten Pyrometern gemessen werden. Eine meßtechnische Erfassung einer konkreten Wanddicke im Bereich der geblasenen Behälter kann mit sogenannten Wanddickensensoren erfolgen, die beispielsweise optisch oder unter Verwendung von Schallwellen arbeiten.

Weitere wesentliche Parameter zur Beeinflussung der Materialverteilung im geblasenen Behälter sind die Reckgeschwindigkeit, die zeitliche Zuordnung des Reckvorganges zur Blasgaszuführung, der Volumenstrom des Blasgases sowie der zeitliche Druckverlauf bei der Expansion des Vorformlings zum Behälter. Insbesondere die Steuerung des tatsächlichen Blasdruckes erweist sich als schwierig, da zwischen einem Steuerventil zur Blasdruckvorgabe und dem zu expandierenden Vorformling ein Strömungsweg mit unterschiedlichen Leitungsquerschnitten und die Strömung beeinflussenden Drosseln liegt und darüber hinaus durch die Volumenvergrößerung des Vorformlings bei der Umformung in den Behälter eine Rückwirkung auf den sich einstellenden Druck hervorgerufen wird. Andererseits führt das Einfahren der Reckstange in den Vorformling zu einer Verminderung des verfügbaren Volumens. Darüber hinaus liegen vergleichsweise komplexe Wechselwirkungen zwischen den einzelnen Parametern vor, die die konkrete sich ergebende Materialverteilung im geblasenen Behälter beeinflussen.

Die Vielzahl der Parameter und die Wechselwirkungen zwischen den Parametern führen dazu, daß statt einer tatsächlichen Regelung häufig nur eine Steuerung unter Berücksichtigung empirisch ermittelter und manuell vorgegebener Einstellungen erfolgt. Konkret realisierte Regelungen beziehen sich typischerweise auf einzelne Parameter, ohne die Komplexität des Blasprozesses in ausreichender Weise zu berücksichtigen.

Bei typischen Steuerungen erfolgt eine Anpassung an unbekannte oder zeitlich veränderliche Einflußparameter dadurch, daß ein Bediener der Blasmaschine die produzierten Flaschen überprüft und manuell über eine Bedienoberfläche der Steuereinrichtung Parameter des Blasvorganges verändert. Ein derartiges Vorgehen führt dazu, daß zunächst eine Vielzahl von Flaschen produziert werden, deren Eigenschaften von vorgegebenen Sollwerten abweichen und teilweise iterativ eine Annäherung an die ideale Flaschengestaltung erfolgen. Auch bei einer meßtechnischen Erfassung von Eigenschaften der geblasenen Flaschen und einer Rückkopplung im Rahmen von Regelungen müssen zum einen zunächst Regelabweichungen auftreten, um hierauf reagieren zu können, darüber hinaus weisen die vorhandenen Regelungskonzepte aufgrund der komplexen Wechselwirkungen zwischen den einzelnen Blasparametern Schwächen auf, die entweder zu nicht zufriedenstellenden Ausregelungen von Abweichungen führen, oder die lange Ausregelzeiten zur Folge haben.

Aufgabe der vorliegenden Erfindung ist es, ein Verfahren der einleitend genannten Art derart zu verbessern, daß mit geringem maschinenbaulichen Aufwand eine qualitativ hochwertige Behälterformung bei gleichzeitig hohen Durchsatzraten unterstützt wird.

Diese Aufgabe wird erfindungsgemäß dadurch gelöst, daß von der Steuereinrichtung unter Verwendung eines Simulationsmodells basierend auf den gemessenen den Blasformungsvorgang charakterisierenden Parametern mindestens eine Eigenschaft des fertig geblasenen Behälters errechnet und mit einem Sollwert verglichen wird und daß basierend auf einer eventuellen Abweichung zwischen dem Sollwert und dem Istwert der den Blasformungsvorgang beeinflussende Parameter derart verändert wird, daß eine eventuell verbleibende Abweichung minimiert wird.

Weitere Aufgabe der vorliegenden Erfindung ist es, eine Vorrichtung der einleitend genannten Art derart zu konstruieren, daß hohe Durchsatzraten bei einfachem konstruktiven Aufbau und guter produktqualität unterstützt werden.

Diese Aufgabe wird erfindungsgemäß dadurch gelöst, daß die Steuereinrichtung ein Simulationsmodell aufweist, das basierend auf den gemessenen den Blasformungsvorgang charakterisierenden Parametern mindestens eine Eigenschaft des fertig geblasenen Behälters errechnet und mit einem Sollwert vergleicht und daß basierend auf einer eventuellen Abweichung zwischen dem Sollwert und dem Istwert der den Blasformungsvorgang beeinflussende Parameter vom Stellelement derart veränderbar ist, daß eine eventuelle verbleibende Abweichung minimiert wird.

Die Steuerung oder Regelung des Blasvorganges unter Berücksichtigung eines den geblasenen Behälter charakterisierenden Parameters sowie die Berücksichtigung der Wechselwirkungen einzelner Einflußfaktoren durch das Simulationsmodell des Blasprozesses ermöglicht eine qualitativ äußerst hochwertige Behälterproduktion, da vorgegebene Sollwerte mit geringen Toleranzen eingehalten werden und eine Ausregelung von Störeinflüssen mit geringer Zeitverzögerung erfolgen kann. Das Simulationsmodell berücksichtigt insbesondere Strömungsquerschnitte und Strömungswiderstände im Bereich der Blasgaszufuhr, Wechselwirkungen zwischen dem sich einstellenden Druck, dem Volumenstrom an Blasgas sowie Volumenänderungen aufgrund der sich entwickelnden Behälterblase und der jeweiligen Positionierung der Reckstange sowie gegebener weiterer Einflußfaktoren, wie beispielsweise die Temperatur der Vorformlinge, die Temperaturverteilung in der Wandung der Vorformlinge sowie die Blasformtemperatur. Grundsätzlich ist es möglich, beliebige zusätzliche Einflußfaktoren mit in das Simulationsmodell des Blasvorganges einzubeziehen.

Für eine schnelle Ausregelung von auftretenden Störungen bzw. zur Vermeidung des Auftretens derartiger Störungen trägt es wesentlich bei, daß das Simulationsmodell nicht nur die physikalischen Abläufe des Blasvorganges simuliert, sondern daß der gesamte Herstellungsprozeß der blasgeformten Behälter simuliert wird und daß hierdurch ohne ein notwendiges meßtechnisches Erfassen von tatsächlichen Eigenschaften des geblasenen Behälters bereits allein aufgrund der vorliegenden Parameter des Heizvorganges, des Blasvorganges sowie der verwendeten Materialien mit einer sehr großen Zuverlässigkeit die Eigenschaften des geblasenen Behälters vorherbestimmt werden können. Es ist somit insbesondere möglich, bereits vor einer Produktion von Behältern, die nicht gewünschte Eigenschaften aufweisen werden, derart auf den Produktionsprozeß einzuwirken, daß die Herstellung von Behältern mit unerwünschten Eigenschaften vermieden wird.

Beispielsweise ist es möglich, unter Verwendung von Expertenwissen, das der Steuerungseinrichtung in digitalisierter Form zur Verfügung gestellt werden kann, die betreffenden Simulationen durchzuführen. Das entsprechende Expertenwissen kann sich beispielsweise auf die prozeßvorgänge sowohl des Heizprozesses als auch des Blasprozesses beziehen. Darüber hinaus kann das Simulationsmodell das Expertenwissen zu Materialeigenschaften des verwendeten thermoplastischen Materials sowie der geblasenen Behälter aus diesem Material berücksichtigen. Von Bedeutung sind hierbei Materialeigenschaften, Materialverteilungen im Vorformling und in der geblasenen Flasche sowie die Flaschenkontur. Insbesondere umfassen die Informationen zur Flaschenkontur die Kontur unmittelbar nach einem Abschluß des Blasvorganges, die Kontur nach einer Entnahme des Behälters aus der Blasform, die Kontur nach einem eventuellen Rückschrumpfen sowie die Kontur im Benutzungszustand, beispielsweise mit einem abgefüllten karbonisierten Getränk. Das Simulationsmodell kann unterschiedliche Eigenschaften der geblasenen Behälter ermitteln, beispielsweise die Stapelfähigkeit der Behälter, die Griffstabilität sowie das Verhalten des Behälters bei einer Druckeinwirkung.

Im Hinblick auf die vorliegende Erfindung werden vorstehend und nachfolgend die Begriffe der Regelung sowie die Begriffe der Steuerung jeweils beispielhaft verwendet. Grundsätzlich können alle als Steuerung bezeichneten Vorgänge auch als Regelung realisiert werden und alle als Regelung bezeichneten Vorgänge lassen sich in einer vereinfachten Ausführung auch als Steuerung durchführen. Ebenfalls ist es möglich, bei den hinsichtlich einer Steuerung erläuterten Abläufen zusätzlich auch eine Regelung durchzuführen, oder bei den hinsichtlich der Regelung erläuterten vorgänge zusätzlich auch eine Steuerung vorzunehmen.

Eine realitätsnahe Simulation kann dadurch durchgeführt werden, daß mindestens ein den Blasformungsvorgang charakterisierender Parameter ausgewählt aus der Gruppe vorformlingstemperatur, Temperaturverteilung im vorformling, Blasdruckverlauf, Reckverlauf, Materialeigenschaften, Materialverteilung im vorformling, Materialverteilung im geblasenen Behälter, Behälterkontur, Umgebungsparameter ausgewertet wird.

Eine hohe Übereinstimmung zwischen den simulierten Werte und tatsächlichen Werten kann dadurch erreicht werden, daß das Simulationsmodell unter verwendung von Expertenwissen die Simulationen durchführt.

Aussagefähige Ergebnisse werden dadurch bereitgestellt, daß bei der vom simulationsmodell durchgeführten Simulation von Eigenschaften des geblasenen Behälters mindestens ein Parameter des geblasenen Behälters ausgewählt aus der Gruppe Materialverteilung im geblasenen Behälter, Behälterkontur unter Druckbelastung, Stapelfähigkeit des Behälters, Griffstabilität des Behälters, Druckverhalten des Behälters simuliert wird.

Ein adaptives Simulationsmodell wird dadurch bereitgestellt, daß mindestens ein simulierter Wert des geblasenen Behälters mit einer Eigenschaft eines real geblasenen Behälters verglichen wird.

Insbesondere kann eine gute Übereinstimmung von simulierten und tatsächlichen Werten dadurch erreicht werden, daß eine meßtechnische Erfassung mindestens eines Parameters des geblasenen Behälters durchgeführt wird.

Die Herstellung von geblasenen Behältern mit geringen Abweichungen von Sollparametern wird dadurch unterstützt, daß das Simulationsmodell innerhalb eines geschlossenen Regelkreises verwendet wird.

Eine schnelle Ausregelung von Störgrößen wird dadurch unterstützt, daß das Simulationsmodell als Teil einer Kaskadenregelung verwendet wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung eines Regelungskonzepts zur Regelung der Temperierung und der Blasformung unter Verwendung eines Simulationsmodells und
- Fig. 6: eine schematische Darstellung einer Variante zur Verwendung des Simulationsmodells.

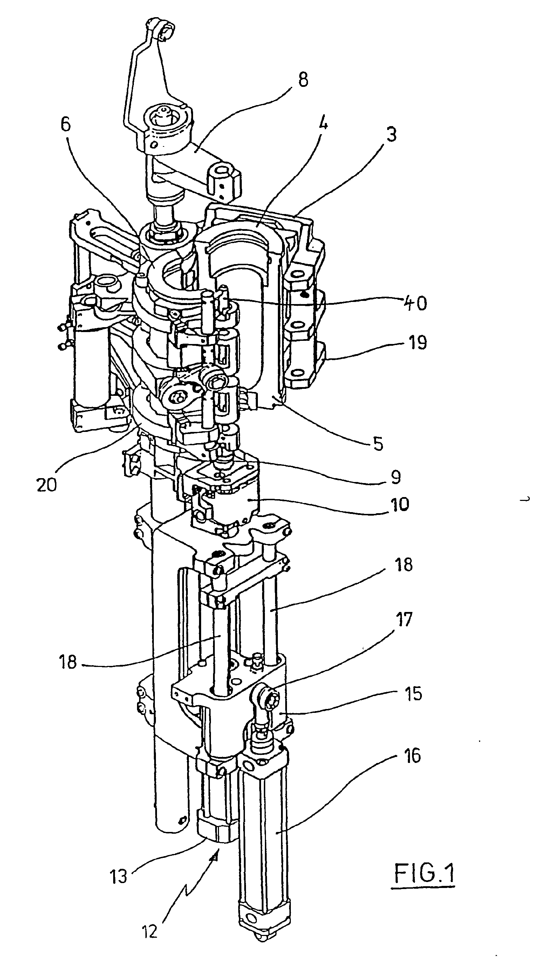

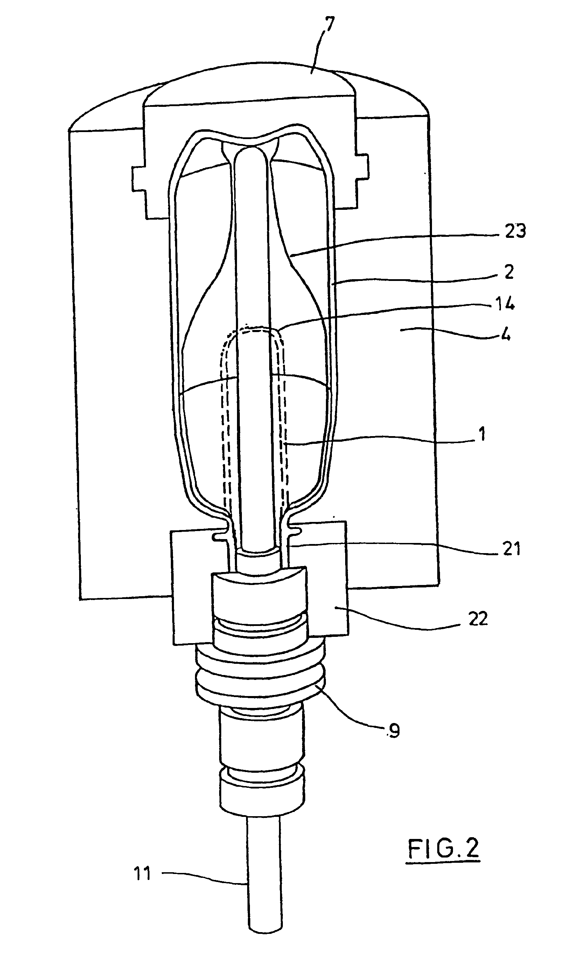

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

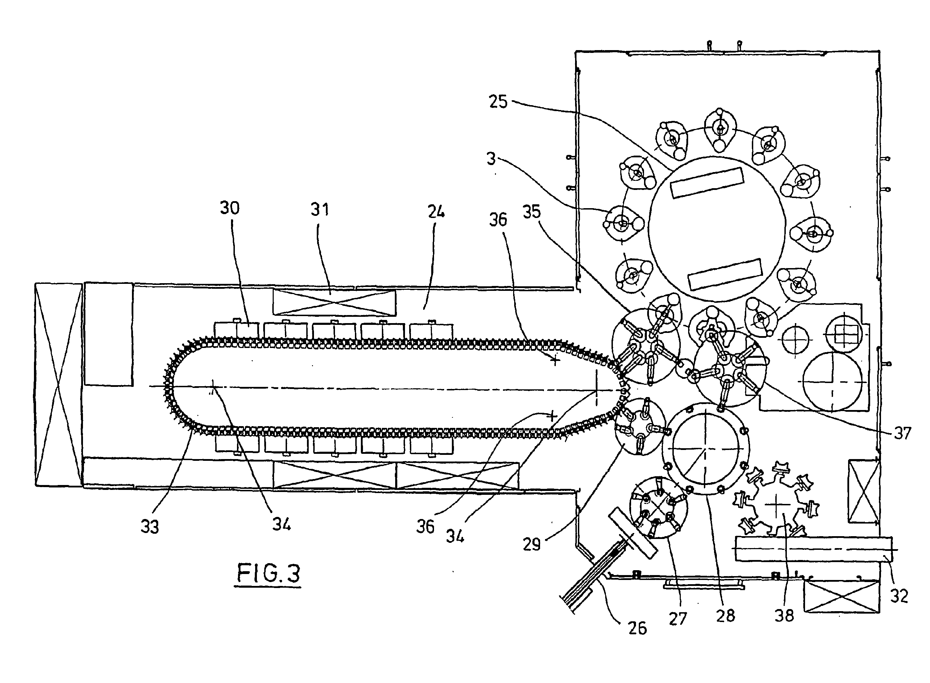

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

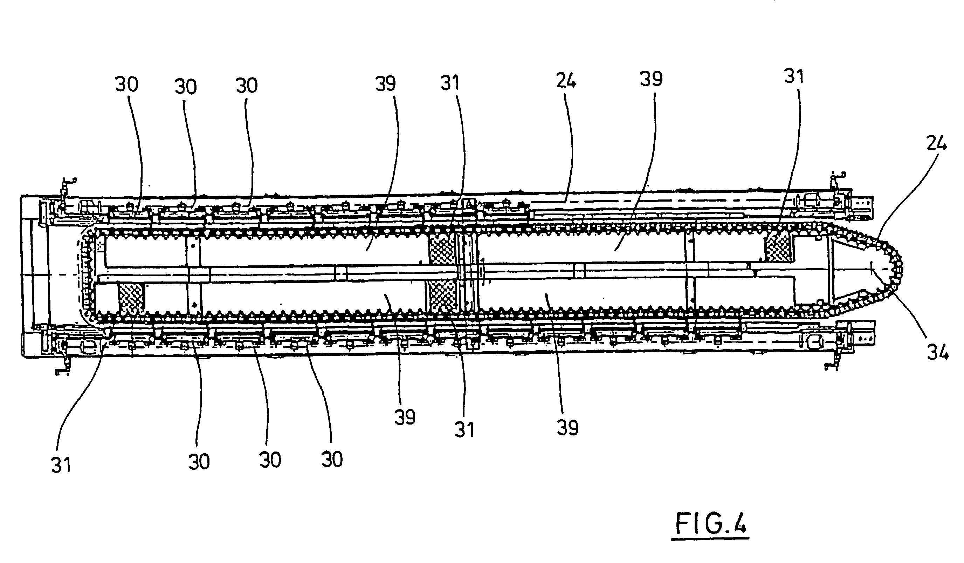

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

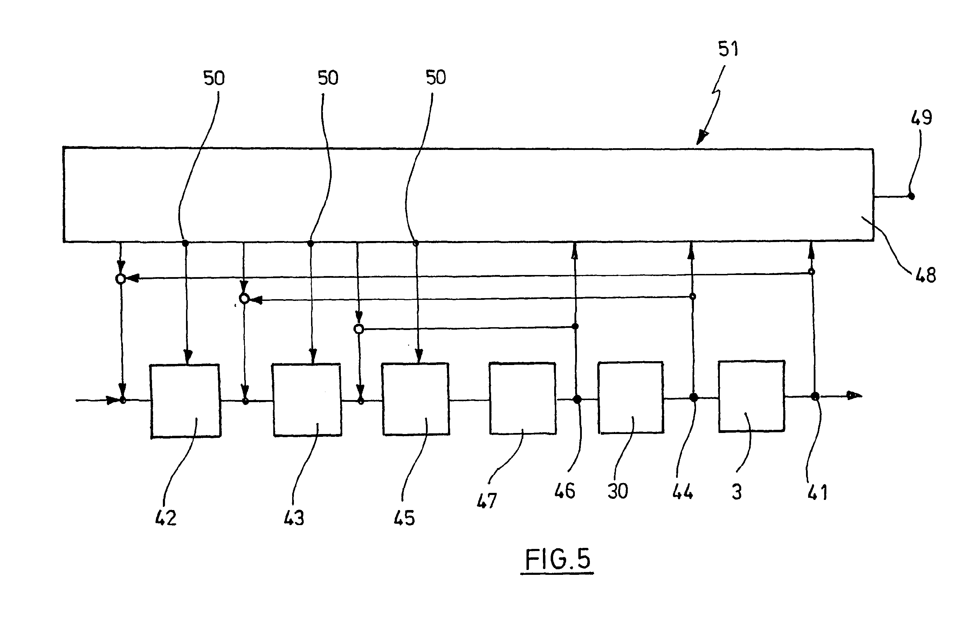

Fig. 5 zeigt eine schematische Darstellung eines Regelungssystems für die Heizelemente (30) bzw. für Strahlerröhren in einem äußeren Regelkreis sowie für einen oder mehrere die Blasgaszufuhr betreffende Parameter in einem inneren Regelkreis. Das Regelungssystem ist in Form einer Kaskadenregelung ausgebildet. Ein äußerer Regelkreis erfaßt hinter der Blasstation (3) über die Meßeinrichtung (41) die Wanddicke (2) des Behälters (2) auf mindestens einem vorgegebenen Höhenniveau und führt diesen Istwert dem Eingang eines Wanddickenreglers (42) zu. Grundsätzlich können auch beliebige andere oder zusätzliche Parameter meßtechnisch erfaßt und durch die Regelung berücksichtigt werden. Unmittelbarer Eingangswert für den Wanddickenregler (42) ist die Regeldifferenz zwischen einer vorgegebenen Wanddicke sowie der meßtechnisch erfaßten Wanddicke. Ein Ausgangswert des Wanddickenreglers (42) stellt den Sollwert für einen inneren Temperaturregelkreis bereit.

Einem Temperaturregler (43) wird als unmittelbarer Steuerwert die Differenz zwischen dem Ausgangswert des Wanddikkenreglers (42) und einem von einem Temperatursensor (44) erfaßten Temperaturwert des Vorformlings (1) auf einem vorgegebenen Höhenniveau zugeführt.

Der innerste und somit schnellste Regelkreis der in Fig. 8 dargestellten Kaskadenregelung umfaßt einen oder mehrere Blasgasregler (45). Der Blasgasregler (45) kann zur Regelung beispielsweise eines Druckes und/oder eines Volumenflusses des Blasgases ausgebildet sein. Als Istwert wird dem Blasgasregler (45) eine Regeldifferenz zwischen einem von einem Sensor (46) bereitgestellten Istwert zum jeweils geregelten Blasgasparameter bereitgestellt, der sich als Ausgangswert einer zugeordneten Regelstrecke (47) ergibt.

Vorteilhafterweise ist mindestens einer der Regler (42, 43, 45) mit einem Integralverhalten ausgebildet, um Regeldifferenzen zu vermeiden. Gemäß einer weiteren Regelungsvariante berücksichtigt die Regelung ein Totzeitverhalten des Regelungssystems aufgrund der Transportweglängen der vorformlinge (1) bzw. der Behälter (2). Es wird hierbei berücksichtigt, daß eine in Abhängigkeit von der Transportgeschwindigkeit bekannte Verzögerung zwischen einer Stellgrößenveränderung und einer Veränderung der Ausgangsgröße vorliegt.

Alternativ zu der in Fig. 5 dargestellten kaskadenartigen Realisierung des Regelungskonzeptes können auch beliebige andere Regelungsstrukturen realisiert werden. Bei kaskadenartigen Regelungsstrukturen erweist es sich als zweckmäßig, in den inneren Kreisen schnell veränderliche Prozeßparameter und in den äußeren Regelkreisen langsam veränderliche Prozeßparameter zu regeln.

Mindestens einer der von den Sensoren (41, 44, 46) gelieferten Meßwerte wird einem Simulationsmodell (48) zugeführt. Das Simulationsmodell (48) weist darüber hinaus einen oder mehrere Sensoreingänge (49) auf, um zusätzliche gemessene Informationen im Hinblick auf den Blasprozeß zu berücksichtigen. Das Simulationsmodell weist darüber hinaus einen oder mehrere Modellausgänge (50) auf, die eine Beeinflussung des Regelungsverhaltens ermöglichen. Gemäß einer Ausführungsvariante wird über den Modellausgang (50) die Regelcharakteristik mindestens eines der Regler (42, 43, 45) verändert. Gemäß einer weiteren Ausführungsvariante ist alternativ oder ergänzend auch daran gedacht, über den oder die Modellausgänge (50) den Eingangswert mindestens eines der Regler (42, 43, 45) zu beeinflussen. Diese Beeinflussung kann beispielsweise zusätzlich zu der von den Sensoren (41, 44, 46) hervorgerufenen Beeinflussung erfolgen. Ebenfalls ist es auch möglich, mindestens eines der Signale der Sensoren (41, 44, 46) durch einen am Modellausgang (50) verfügbaren Wert zu ersetzen.

Das Simulationsmodell (48) ermöglicht es, bei der Durchführung der Regelung komplexe Zusammenhänge zwischen den einzelnen Prozeßparametern zu berücksichtigen. Es können insbesondere Verzögerungen, Totzeiten und Nichtlinearitäten berücksichtigt werden. Darüber hinaus ermöglicht es das Simulationsmodell (48) auch, in die Regelung Prozeßgrößen einzubeziehen, die sich einer unmittelbaren meßtechnischen Erfassung entziehen oder die nur mit einem hohen Aufwand meßtechnisch erfaßbar wären.

Die Regelung einer Behälterherstellung kann beispielsweise auf Basis eines vorgegebenen Druckverlaufes für den Blasdruck erfolgen. Werden bei einem vergleich der gemessenen Werte mit den vom Simulationsmodell generierten Werten Abweichungen bei mindestens einem der meßtechnisch erfaßten Parameter erkannt, so kann beispielsweise für jeden der Produktionszyklen der Startpunkt für die Zuführung des Vorblasdruckes geändert werden und/oder es ist möglich, die Geschwindigkeit des Reckvorganges in geeigneter Weise zu erhöhen oder zu erniedrigen. Dies kann insbesondere durch eine Vorgabe der jeweiligen Einfahrgeschwindigkeit der Reckstange in den zu reckenden Vorformling (1) hinein erfolgen. Ebenfalls ist daran gedacht, eine Anpassung des Temperaturprofils und/oder der Heizleistung vorzunehmen.

Unter Verwendung des Simulationsmodells (48) ist es insbesondere möglich, die ermittelten Resultate der Flaschensimulation mit den Eigenschaften real geblasener Flaschen abzugleichen. Falls bei diesem Abgleich Abweichungen festgestellt werden, kann über Korrekturvorgänge und insbesondere über Korrekturschleifen eine Veränderung der Prozeßparameter so lange erfolgen, bis die Werte der Flaschensimulation mit den Eigenschaften real geblasener Flaschen übereinstimmen.

Die Verwendung des Simulationsmodells (48) ist zum einen im Rahmen einer reinen Steuerung möglich. Insbesondere ist aber daran gedacht, ein rückgekoppeltes Regelungssystem bereitzustellen, das in die Steuerung einer Blasmaschine integriert ist. Durch eine derartige Regelung können insbesondere auch Veränderungen der Umgebungsbedingungen berücksichtigt werden.

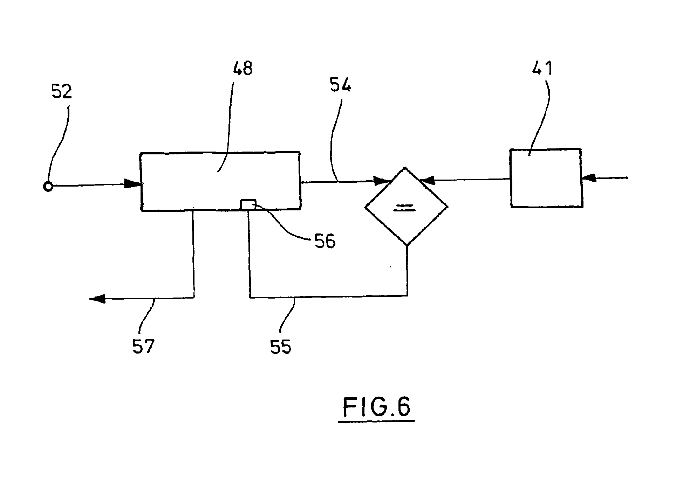

Alternativ oder ergänzend zu der in Fig. 5 veranschaulichten Verwendung des Simulationsmodels (48) ist es auch möglich, eine Verwendung entsprechend der Darstellung in Fig. 6 zu realisieren. Hier werden dem Simulationsmodell (48) Informationen zu einem Temperaturprofil (52) zugeführt. Von der Meßeinrichtung (41) wird die Wandstärke oder eine Wandstärkenverteilung in Bereich des geblasenen Behälters (2) erfaßt und einer Differenzbildung (53) zugeführt. Die Differenzbildung (53) erhält als Ausgangswert (54) des Simulationsmodells (48) Sollwerte für die Wandstärke oder eine Wandstärkenverteilung. Eine entsprechende Abweichung (55) wird einem Differenzeingang (56) des Simulationsmodells (48) zugeführt. Unter Berücksichtigung der eingespeisten Informationen stellt das Simulationsmodell (48) Korrekturwerte (57) für das Temperaturprofil bereit. Das Temperaturprofil betrifft typischerweise die Temperaturverteilung des Vorformlings (1) in seiner Längsrichtung und/oder die Temperaturverteilung zwischen der inneren oder der äußeren Begrenzung der Vorformlingswandung.

Es wird somit die Abweichung zwischen simulierten Werten für die Wandstärke und tatsächlich gemessenen Prozeßparametern bezüglich der Wandstärke ausgewertet.

## Patentansprüche

1. Verfahren zur Blasformung von Behältern (2), bei dem ein Vorformling (1) aus einem thermoplastischen Material nach einer thermischen Konditionierung entlang eines Transportweges im Bereich einer Heizstrecke innerhalb einer Blasform (4) durch Blasdruckeinwirkung in den Behälter (2) umgeformt wird, sowie bei dem mindestens ein den Blasformungsvorgang charakterisierender Parameter meßtechnisch erfaßt und einer Steuereinrichtung (51) zugeführt wird, die zur Veränderung mindestens eines den Blasformungsvorgang beeinflussenden Parameters auf mindestens ein Stellelement einwirkt, **dadurch gekennzeichnet, daß** von der Steuereinrichtung (51) unter Verwendung eines Simulationsmodells (48) basierend auf den gemessenen den Blasformungsvorgang charakterisierenden Parametern mindestens eine Eigenschaft des fertig geblasenen Behälters (2) errechnet und mit einem Sollwert verglichen wird und daß basierend auf einer eventuellen Abweichung zwischen dem Sollwert und dem Istwert der den Blasformungsvorgang beeinflussende Parameter derart verändert wird, daß eine eventuell verbleibende Abweichung minimiert wird.

2. Verfahren nach Anspruch 1, **dadurch gekennzeichnet, daß** mindestens ein den Blasformungsvorgang charakterisierender Parameter ausgewählt aus der Gruppe Vorformlingstemperatur, Temperaturverteilung im Vorformling (1), Blasdruckverlauf, Blasgasvolumenstrom, Reckverlauf, Materialeigenschaften, Materialverteilung im Vorformling (1), Materialverteilung im geblasenen Behälter (2), Behälterkontur, Umgebungsparameter ausgewertet wird.

3. Verfahren nach einem der Ansprüche 1 oder 2, **dadurch gekennzeichnet, daß** bei der vom Simulationsmodell (48) durchgeführten Simulation von Eigenschaften des geblasenen Behälters (2) mindestens ein Parameter des geblasenen Behälters (2) ausgewählt aus der Gruppe Materialverteilung im geblasenen Behälter (2), Behälterkontur unter Druckbelastung, Stapelfähigkeit des Behälters (2), Griffstabilität des Behälters (2), Druckverhalten des Behälters (2) simuliert wird.

4. Verfahren nach einem der Ansprüche 1 bis 3, **dadurch gekennzeichnet, daß** mindestens ein simulierter Wert des geblasenen Behälters (2) mit einer Eigenschaft eines real geblasenen Behälters (2) verglichen wird.

5. Verfahren nach einem der Ansprüche 1 bis 4, **dadurch gekennzeichnet, daß** eine meßtechnische Erfassung mindestens eines Parameters des geblasenen Behälters (2) durchgeführt wird.

6. Verfahren nach einem der Ansprüche 1 bis 5, **dadurch gekennzeichnet, daß** das Simulationsmodell (48) innerhalb eines geschlossenen Regelkreises verwendet wird.

7. Verfahren nach Anspruch 6, **dadurch gekennzeichnet, daß** das Simulationsmodell (48) als Teil einer Kaskadenregelung verwendet wird.

8. Vorrichtung zur Blasformung von Behältern (2) aus einem thermoplastischen Material, die mindestens eine entlang eines Transportweges eines Vorformlings (1) angeordnete Heizstrecke und mindestens eine mit einer Blasform versehene Blasstation (3) aufweist, sowie bei der eine Steuereinrichtung (51) verwendet ist, und die mindestens einen Sensor zur meßtechnischen Erfassung mindestens eines den Blasformungsvorgang charakterisierenden Parameters aufweist, der mit der Steuereinrichtung (51) verbunden ist, **dadurch gekennzeichnet, daß** die Steuereinrichtung (51) ein Simulationsmodell (48) aufweist, das basierend auf den gemessenen den Blasformungsvorgang charakterisierenden Parametern mindestens eine Eigenschaft des fertig geblasenen Behälters (2) errechnet und mit einem Sollwert vergleicht, und daß basierend auf einer eventuellen Abweichung zwischen dem Sollwert und dem Istwert der den Blasformungsvorgang beeinflussende Parameter vom Stellelement derart veränderbar ist, daß eine eventuelle verbleibende Abweichung minimiert wird.

9. Vorrichtung nach Anspruch 8, **dadurch gekennzeichnet, daß** das Simulationsmodell (48) zur Auswertung mindestens eines den Blasvorgang charakterisierenden Parameters ausgewählt aus der Gruppe Vorformlingstemperatur, Temperaturverteilung im Vorformling (1), Blasdruckverlauf, Blasgasvolumenstrom, Reckverlauf, Materialeigenschaften, Materialverteilung im Vorformling (1), Materialverteilung im geblasenen Behälter (2), Behälterkontur, Umgebungsparameter ausgebildet ist.

10. Vorrichtung nach einem der Ansprüche 8 oder 9, **dadurch gekennzeichnet, daß** das Simulationsmodell (48) zur Auswertung mindestens eines Parameters des geblasenen Behälters (2) ausgewählt aus der Gruppe Materialverteilung im geblasenen Behälter (2), Behälterkontur unter Druckbelastung, Stapelfähigkeit des Behälters (2), Griffstabilität des Behälters (2), Druckverhalten des Behälters (2) ausgebildet ist.

11. Vorrichtung nach einem der Ansprüche 8 bis 10, **dadurch gekennzeichnet, daß** das Simulationsmodell (48) eine Vergleichseinrichtung zum Abgleich von simulierten Eigenschaften des geblasenen Behälters (2) mit Eigenschaften eines real geblasenen Behälters (2) aufweist.

12. Vorrichtung nach einem der Ansprüche 8 bis 11, **dadurch gekennzeichnet, daß** an das Simulationsmodel (48) mindestens ein Sensor zur meßtechnischen Erfassung mindestens eines Parameters des geblasenen Behälters (2) angeschlossen ist.

13. Vorrichtung nach einem der Ansprüche 8 bis 12, **dadurch gekennzeichnet, daß** das Simulationsmodell (48) innerhalb eines Regelkreises angeordnet ist.

14. Vorrichtung nach Anspruch 13, **dadurch gekennzeichnet, daß** der Regelkreis als eine Kaskadenregelung ausgebildet ist.

## Claims

1. A method for the blow moulding of containers (2) wherein, after having been conditioned thermally along a transport path in the area of a heating section, a preform (1) made of a thermoplastic material is moulded in a blow mould (4) by the action of blowing pressure to form the container (2), and wherein at least one parameter characterising the blow moulding operation is registered by means of technical measuring equipment and is supplied to a control unit (51) which acts on at least one control member to change at least one parameter affecting the blow moulding operation,
**characterised in that**
- by using a simulation model (48) and based on the measured parameters characterising the blow moulding operation, the control unit (51) calculates at least one property of the completely blown container (2) and compares it with a desired value and that, based on a possible difference between the desired value and the actual value, the parameter affecting the blow moulding operation is changed in such a way that a possibly remaining difference is minimised.

2. The method according to Claim 1, **characterised in that** at least one parameter characterising the blow moulding operation, which is selected from the group consisting of preform temperature, temperature distribution in the preform (1), blowing pressure development, blowing gas volume flow, stretch forming development, material properties, material distribution in the preform (1), material distribution in the blown container (2), container outline, ambient parameters, is evaluated.

3. The method according to any one of Claims 1 or 2, **characterised in that**, during the simulation of properties of the blown container (2) carried out by the simulation model (48), at least one parameter of the blown container (2), which is selected from the group consisting of material distribution in the blown container (2), container outline under pressure load, stackability of the container (2), grip stability of the container (2), pressure behaviour of the container (2), is simulated.

4. The method according to any one of Claims 1 to 3, **characterised in that** at least one simulated value of the blown container (2) is compared with a property of the really blown container (2).

5. The method according to any one of Claims 1 to 4, **characterised in that** at least one parameter of the blown container (2) is registered by means of technical measuring equipment.

6. The method according to any one of Claims 1 to 5, **characterised in that** the simulation model (48) is used inside a closed control loop.

7. The method according to Claim 6, **characterised in that** the simulation model (48) is used as a part of a cascade control.

8. A device for the blow moulding of containers (2) made of a thermoplastic material, the device comprising at least one heating section arranged along a transport path of a preform (1) and at least one blowing station (3) provided with a blow mould, and wherein use is made of a control unit (51), and which comprises at least one sensor for registering at least one parameter characterising the blow moulding operation by means of technical measuring equipment, the sensor being connected to the control unit (51), **characterised in that** the control unit (51) comprises a simulation model (48) which, based on the measured parameters characterising the blow moulding operation, calculates at least one property of the completely blown container (2) and compares it with a desired value and that, based on a possible difference between the desired value and the actual value, the parameter affecting the blow moulding operation can be changed by the control member in such a way that a possibly remaining difference is minimised.

9. The device according to Claim 8, **characterised in that** the simulation model (48) is designed for the evaluation of at least one parameter characterising the blowing operation, which is selected from the group consisting of preform temperature, temperature distribution in the preform (1), blowing pressure development, blowing gas volume flow, stretch forming development, material properties, material distribution in the preform (1), material distribution in the blown container (2), container outline, ambient parameters.

10. The device according to any one of Claims 8 or 9, **characterised in that** the simulation model (48) is designed for the evaluation of at least one parameter of the blown container (2), which is selected from the group consisting of material distribution in the blown container (2), container outline under pressure load, stackability of the container (2), grip stability of the container (2), pressure behaviour of the container (2).

11. The device according to any one of Claims 8 to 10, **characterised in that** the simulation model (48) comprises a comparison apparatus for comparing simulated properties of the blown container (2) with properties of a really blown container (2).

12. The device according to any one of Claims 8 to 11, **characterised in that** at least one sensor for registering at least one parameter of the blown container (2) by means of technical measuring equipment is connected to the simulation model (48).

13. The device according to any one of Claims 8 to 12, **characterised in that** the simulation model (48) is arranged inside a control loop.

14. The device according to Claim 13, **characterised in that** the control loop is designed as a cascade control.

## Revendications

1. Procédé de moulage par soufflage de récipients (2) dans le cadre duquel une préforme (1) en un matériau thermoplastique, après un conditionnement thermique le long d'un parcours dans une zone de chauffage, est transformée à l'intérieur d'un moule de soufflage (4) en un récipient (2) sous l'action d'une pression de soufflage, et pour lequel au moins un paramètre caractéristique du processus de moulage par soufflage fait l'objet d'une saisie métrologique et est transmis à un dispositif de commande (51) lequel agit sur au moins un élément de réglage pour modifier au moins un paramètre influant sur le processus de moulage par soufflage, **caractérisé en ce qu'**au moins une caractéristique du récipient (2) achevé est calculée et comparée avec une valeur de consigne par le dispositif de commande (51) en utilisant un modèle de simulation (48) basé sur les paramètres mesurés caractéristiques du processus de moulage par soufflage, et **en ce que**, sur la base d'une éventuelle divergence entre la valeur de consigne et la valeur effective, le paramètre influant sur le processus de moulage par soufflage est modifié de façon à minimiser une éventuelle divergence résiduelle.

2. Procédé selon la revendication 1, **caractérisé en ce qu'**est évalué au moins un paramètre caractérisant le processus de moulage par soufflage choisi dans le groupe : température de la préforme, répartition de la température dans la préforme (1), allure de la pression de soufflage, débit volumétrique de la pression de soufflage, allure d'étirage, caractéristiques du matériau, répartition du matériau dans la préforme (1), répartition du matériau dans le récipient achevé (2), contours du récipient, paramètres ambiants.

3. Procédé selon l'une des revendications 1 ou 2, **caractérisé en ce que**, lors de la simulation de caractéristiques du récipient moulé par soufflage (2) réalisée par le modèle de simulation (48), est simulé au moins un paramètre du récipient moulé (2) choisi dans le groupe : répartition du matériau dans le récipient moulé (2), contours du récipient sous pression, aptitude du récipient (2) à l'empilage, stabilité du récipient (2) sous la pression des doigts, comportement du récipient (2) sous l'effet de la pression.

4. Procédé selon l'une des revendications 1 à 3, **caractérisé en ce qu'**au moins une valeur simulée du récipient moulé (2) est comparée avec une caractéristique d'un récipient moulé réel (2).

5. Procédé selon l'une des revendications 1 à 4, **caractérisé en ce qu'**il est procédé à la saisie métrologique d'au moins un paramètre du récipient moulé (2).

6. Procédé selon l'une des revendications 1 à 5, **caractérisé en ce que** le modèle de simulation (48) est utilisé dans une boucle d'asservissement fermée.

7. Procédé selon la revendication 6, **caractérisé en ce que** le modèle de simulation (48) est utilisé comme partie d'une régulation en cascade.

8. Dispositif de moulage par soufflage de récipients (2) en un matériau thermoplastique présentant au moins une zone de chauffage agencée le long d'un parcours d'une préforme (1) et au moins une station de soufflage (3) munie d'un moule de soufflage, et pour lequel est utilisé un dispositif de commande (51) et qui présente au moins un détecteur pour la saisie métrologique d'au moins un paramètre caractérisant le processus de moulage par soufflage, lequel détecteur est relié au dispositif de commande (51), **caractérisé en ce que** le dispositif de commande (51) présente un modèle de simulation (48) qui, basé sur les paramètres mesurés caractéristiques du processus de moulage par soufflage, calcule et compare avec une valeur de consigne au moins une caractéristique du récipient (2) achevé et que, sur la base d'une éventuelle divergence entre la valeur de consigne et la valeur effective, le paramètre influant sur le processus de moulage par soufflage est modifié par l'élément de réglage de façon à minimiser une éventuelle divergence résiduelle.

9. Procédé selon la revendication 8, **caractérisé en ce que** le modèle de simulation (48) est conçu pour l'évaluation d'au moins un paramètre caractérisant le processus de moulage par soufflage choisi dans le groupe : température de la préforme, répartition de la température dans la préforme (1), allure de la pression de soufflage, débit volumétrique de la pression de soufflage, allure d'étirage, caractéristiques du matériau, répartition du matériau dans la préforme (1), répartition du matériau dans le récipient achevé (2), contours du récipient, paramètres ambiants.

10. Dispositif selon l'une des revendications 8 ou 9, **caractérisé en ce que** le modèle de simulation (48) est conçu pour l'évaluation d'au moins un paramètre caractérisant le récipient moulé (2) choisi dans le groupe : répartition du matériau dans le récipient moulé (2), contours du récipient sous pression, aptitude du récipient (2) à l'empilage, stabilité du récipient (2) sous la pression des doigts, comportement du récipient (2) sous l'effet de la pression.

11. Dispositif selon l'une des revendications 8 à 10, **caractérisé en ce que** le modèle de simulation (48) présente un comparateur pour ajuster des caractéristiques simulées du récipient moulé (2) sur des caractéristiques d'un récipient moulé réel (2).

12. Dispositif selon l'une des revendications 8 à 11, **caractérisé en ce qu'**au moins un détecteur pour la saisie métrologique d'au moins un paramètre du récipient moulé (2) est connecté au modèle de simulation (48).

13. Dispositif selon l'une des revendications 8 à 12, **caractérisé en ce que** le modèle de simulation (48) est agencé dans une boucle d'asservissement.

14. Dispositif selon la revendication 13, **caractérisé en ce que en ce que** la boucle d'asservissement est réalisée sous forme de régulation en cascade.
